# EUROPÄISCHE PATENTANMELDUNG

(11) **EP 1 621 396 A2**
(43) Veröffentlichungstag der Anmeldung: **01.02.2006**
(21) Anmeldenummer: 05106863.3
(22) Anmeldetag: 26.07.2005
(51) Int. Cl.: B60N 2/44

(54) **Fluidbefüllbarer, volumsveränderlicher Körper**

(30) Priorität: 28.07.2004 AT 12882004
(71) Anmelder: Hoerbiger Automatisierungstechnik Holding GmbH, 86972 Altenstadt (DE); Nündel S.E. Kunststoff-Technik GmbH, 90530 Wendelstein (DE)
(72) Erfinder: Bichler, Thomas Hoerbiger Automatisierungstechnik, 82377 Penzberg (DE); Dörfler, Erich Hoerbiger Automatisierungstechnik, 86899 Landsberg (DE); Amon, Heinz, 90530 Wendelstein (DE); Schmidt, Wilhelm Nündel S.E.Kunststoff-Technik, 90469 Nürnberg (DE)
(74) Vertreter: Laminger, Norbert

(57) **Zusammenfassung**

Ein fluidbefüllbarer, volumsveränderlicher Körper (K) besteht aus zwei übereinanderliegenden, miteinander entlang des umlaufenden Randes verbundenen, vorzugsweise verschweißten Folien (2), vorzugsweise aus Kunststoffmaterial, welche Folien (2) entlang einer Faltachse (F) einen Scharnierbereich bilden, entlang welches Scharnierbereiches die Folien (2) unter Bildung zweier zumindest teilweise übereinanderliegender Teilbereiche des aufblasbaren Körpers (K) übereinandergefaltet sind, und wobei durch die Folien (2) zumindest ein den Scharnierbereich durchquerender Verbindungskanal (4) zwischen den beiden Teilbereichen des befüllbaren Körpers (K) ausgebildet ist.

Um für einen derartigen Körper den Überström-Widerstand zwischen seinen Teilbereichen möglichst herabzusetzen und den einfachen und weichen Fluidaustausch zwischen diesen Teilbereichen selbst bei geringem Druckunterschied und bei größtmöglicher Faltung im Scharnierbereich sicher zu gewährleisten, schließt der oder jeder Verbindungskanal (4) mit der Faltachse (F) einen Winkel (α) kleiner 90° und größer 0° ein.

## Beschreibung

Die Erfindung betrifft einen fluidbefüllbaren, volumsveränderlichen Körper, bestehend aus zwei übereinanderliegenden, miteinander entlang des umlaufenden Randes verbundenen, vorzugsweise verschweißten Folien, vorzugsweise aus Kunststoffmaterial, welche Folien entlang einer Faltachse einen Scharnierbereich bilden, entlang welches Scharnierbereiches die Folien unter Bildung zweier zumindest teilweise übereinanderliegender Teilbereiche des aufblasbaren Körpers übereinandergefaltet sind, und wobei durch die Folien zumindest ein den Scharnierbereich durchquerender Verbindungskanal zwischen den beiden Teilbereichen des befüllbaren Körpers ausgebildet ist.

Ein derartiger Körper ist beispielsweise als Stützkissen für einen Kraftfahrzeugsitz in der DE 203 07 633 U1 geoffenbart. Das beschriebene Stützkissen besteht aus zwei Kissenelementen, die randseitig über ein gemeinsames Scharnier verbunden sind und im Gebrauch zumindest teilweise übereinander zu liegen kommen. Dabei kann das Scharnier durch die die Kissenelemente bildenden Folien gebildet sein, wobei gemäß einer beschriebenen Ausführungsform eine Fluidverbindung zwischen den beiden Kissenelementen durch das Scharnier oder durch einen Verbindungskanal vorgesehen sein kann, der durch Folienbereiche gebildet ist, welche die beiden Kissenelemente zusätzlich zum Scharnier miteinander verbinden.

Bei vollständig entlüfteter Blase führt der Verbindungskanal eine Biegung um 180° aus, so daß der Kanal durch Abquetschung verschlossen wird, da in der außenliegenden Folie ein Zugspannung und in der innenliegenden Folie Druckspannung aufgebaut wird, was die Folien mit relativ hoher Kraft aneinander presst. Der Verbindungskanal setzt somit dem Überströmen des Fluids einen hohen Widerstand entgegen, was sich besonders bei der Wiederbefüllung über einen einzelnen Fluidanschluß auf einer Seite des Scharnierbereichs, aber auch zum Druck-Ausgleich zwischen den beiden Kissenelementen bei nur geringfügig belüfteter Blase sehr negativ auswirkt. Erst ab einem bestimmten Innendruck kann die Anpresskraft der Folien überwunden werden, dann jedoch erfolgt ein relativ schneller, fast schockartiger Fluidaustausch. Ein vollständiges Entleeren des Körpers hingegen ist es fast unmöglich, weil unterhalb eines bestimmten Restdrucks der Widerstand des Verbindungskanal nicht mehr überwunden werden kann. Eine ordnungsgemäße Funktion ist also in solchen Fällen nicht gewährleistet.

Es war daher die Aufgabe der vorliegenden Erfindung, einen Körper der eingangs angegebenen Art derart auszugestalten, daß der Überström-Widerstand zwischen den Teilbereichen des Körpers möglichst herabgesetzt und ein einfacher und weicher Fluidaustausch zwischen diesen Teilbereichen selbst bei geringem Druckunterschied und bei größtmöglicher Faltung im Scharnierbereich sicher gewährleistet ist.

Zur Lösung dieser Aufgabe ist der Körper dadurch gekennzeichnet, daß der oder jeder Verbindungskanal mit der Faltachse einen Winkel kleiner 90° und größer 0° einschließt. Damit wird das vollständige Abquetschen und Verschließen des oder jedes Verbindungskanals verhindert, wobei durch den spiralförmigen Übergang der Verbindungskanäle von einem Teilbereich des Körpers zum anderen Teilbereich eine geringere Materialbelastung für die Folien selbst und auch für deren Verbindungsbereiche untereinander, beispielsweise die Schweißstellen und Schweißraupen, gegeben ist.

Vorteilhafterweise ist dabei vorgesehen, daß der oder jeder Verbindungskanal mit der Faltachse einen Winkel zwischen 30° und 60° einschließt, vorzugsweise einen Winkel von etwa 45°.

Eine gute mechanische Stabilität im Scharnierbereich und für die Verbindungskanäle bietet eine erfindungsgemäße Ausführungsform des Körpers, bei welcher der oder jeder Verbindungskanal seitlich durch Bereiche begrenzt ist, in welchen die Folien flächig miteinander verbunden sind.

Vorzugsweise sind dazu die Folien flächig miteinander verschweißt, was eine einfache Fertigung mit gleichzeitiger Schweißung des Scharnierbereiches und der außenliegenden Umfangsschweißung gestattet.

Neben schweißtechnischen Vorteilen und Verbesserung der Festigkeit der Folienverbindung bietet das weitere Merkmal der Erfindung, gemäß welchem die Eckbereiche der flächigen Verbindungen der Folien abgerundet ausgeführt sind, auch den Vorteil eines Trichtereffektes. Beim Anströmen der Verbindungskanäle entsteht so ein erhöhter Staudruck, der den Kanal optimal öffnet.

Gemäß einem weiteren Merkmal der Erfindung ist im Verlauf des Verbindungskanals zumindest ein Element vorgesehen, welches die Folien auch in entlüftetem Zustand des Körpers über zumindest einen Teil der Breite des Verbindungskanals beabstandet hält. Damit ist die Fluidverbindung zwischen den Teilbereichen des Körpers immer offengehalten, selbst bei stark abgebogenem oder abgeknicktem Scharnier oder separatem Verbindungskanal. Ein derartig ausgebildeter Körper bietet einen weichen Druckausgleich und Fluidaustausch zwischen seinen Teilbereichen, und ermöglicht auch bei Befüllung und Entleerung mittels allein eines Fluidanschlusses eine weiche und gleichmäßige Befüllung sowie die vollständige Entleerung.

Gemäß einer weiteren vorteilhaften Ausführungsform der Erfindung ist vorgesehen, daß der oder jeder Verbindungskanal seitlich durch die bei der flächigen Verschweißung der Folien entstandenen Schweißraupen begrenzt ist, welche Schweißraupen einen Abstand zwischen den Folien zumindest im unmittelbaren Nahbereich an der Seite des oder jedes Verbindungskanals aufrechterhalten. Durch die an der Innenseite des oder jedes Verbindungskanals vorhandenen Schweißraupen kann den Folien im Randbereich der Verbindungskanäle auch eine relative Winkelstellung zueinander aufgeprägt werden, welche die Bildung und das Offenhalten jedes Verbindungskanals zusätzlich begünstigt. So kann bereits im Zuge der Herstellung des Körpers und seiner Teilbereiche auf einfache Weise der weiche Fluidaustausch zu jeder Zeit sichergestellt werden. Bei Folienmaterialien, bei welchen nur wenig ausgeprägte Schweißraupen entstehen, kann durch spezielle Fertigungsschritte dafür gesorgt werden, daß die Schweißraupen dicker ausgebildet sind als zur sicheren Verbindung der übereinanderliegenden Folien notwendig ist.

Um diesen Effekt optimal zur Geltung zu bringen, sind die Schweißraupen dicker ausgebildet sind als zur sicheren Verbindung der übereinanderliegenden Folien notwendig ist. Dies kann durch geeignete Ausbildung der Schweißanlage, speziell durch den Abstand der Schweißelektroden erzielt werden, welche im Bereich der Verbindungskanäle in kleinem Abstand gehalten werden, was zu einer großen Materialverdrängung und damit dicker Schweißraupe führt.

Um jedoch die Gefahr des Zusammenfließens der Schweißraupen und damit eines verschlossenen Verbindungskanals zu vermeiden, ist gemäß einer weiteren vorteilhaften Ausführungsform der Erfindung die Breite des Verbindungskanals größer als die Höhe der ihn seitlich begrenzenden Schweißraupen, vorzugsweise um den Faktor 3.

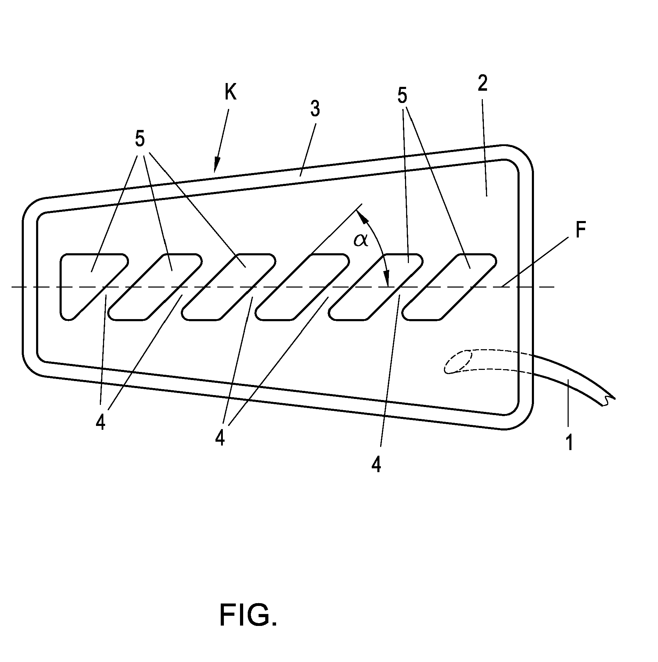

In der nachfolgenden Beschreibung soll die Erfindung anhand eines in der beigefügten Zeichnung dargestellten Ausführungsbeispieles näher erläutert werden.

Die Zeichnungsfigur zeigt ein Stützkissen für einen Fahrzeugsitz, bestehend aus einer Doppel-Folienblase, in auseinandergefaltetem Zustand.

Der dargestellte, über zumindest einen Anschlussschlauch 1 fluidbefüllbare, volumsveränderliche Körper K, etwa eine Lordoseblase oder ähnliches Stützkissen für den Einbau in Fahrzeugsitzen, besteht aus zwei übereinanderliegenden, miteinander entlang des umlaufenden Randes 3 verbundenen, vorzugsweise verschweißten Folien, vorzugsweise aus Kunststoffmaterial, von welchen in der Zeichnung nur die obere Folie 2 zu sehen ist. Durch Faltung entlang der Faltachse F eines Scharnierbereiches bilden die Folien in Gebrauchsstellung des Körpers K zwei übereinanderliegende Teilbereiche.

Zwischen den durch den Scharnierbereich um die Faltachse F getrennten Teilen des Körpers K sind mehrere diesen Scharnierbereich durchquerender Verbindungskanäle 4 zwischen den beiden Teilbereichen des befüllbaren Körpers K ausgebildet. Die Verbindungskanäle 4 schließen mit der Faltachse F den Winkel α ein, im dargestellten Fall 45°, so daß die Verbindungskanäle 4 bei vollständig entlüftetem Körper K einer Spirallinie folgen. Es können Verbindungskanäle 4 über die gesamte Länge des Faltbereiches vorgesehen sein oder auch nur über einen oder mehrere Abschnitte davon, womit die Schnelligkeit des Überströmens der Luft zwischen den beiden Abschnitten des Körpers gesteuert werden kann.

Die Verbindungskanäle 4 werden durch die Flachschweißungs-Bereiche 5 definiert, in welchen Bereichen die Folien ebenso wie im Randbereich 3 verbunden sind. Über die Abmessungen und Verhältnisse von Höhe zu Breite der Flachschweißungs-Bereiche 5 läßt sich das Öffnungsverhalten des Körpers definieren, ebenso wie das parallele Heben bzw. Senken der Abschnitte des Körpers K oder Winkelbewegungen relativ zueinander. In jedem Fall muß aber darauf geachtet werden, daß der lichte Abstand der Elektroden für die Flachschweißungen nicht zu eng ist, damit nicht die Schweißraupen an deren Ränder zu weit ins Innere der Verbindungskanäle 4 fließen und diese verschließen. Daher werden die Kanäle 4 vorteilhafterweise dreimal breiter ausgeführt als die Höhe der Schweißraupen an den Rändern der Flachschweißungs-Bereiche 5.

Der Elektrodenabstand ist auch in Zusammenhang mit der Elektrodenbreite abzustimmen, da breitere Schweißwerkzeuge zu größerer Materialverdrängung und daher zu größerer Schweißraupenbildung führen. Für die Schweißung des Randes 3 des Körpers K dagegen müssen lediglich die Festigkeitsanforderungen erfüllt sein, im allgemeinen ohne spezielle Anforderungen an die Schweißraupenbildung. Daher wird hier eher mit größerem ElektrodenAbstand und damit geringerer Materialverdrängung gearbeitet.

Zur Begünstigung der Bildung der Verbindungskanäle 4 kann - anstelle der regulär verwendeten ebenen und geschlossenen Grundplatte in der Schweißanlage - mit im wesentlichen symmetrisch ausgebildetem Ober- als auch Unterwerkzeug der Schweißanlage und/oder Öffnungen, Schablonen oder Formen für eine gezielte Ausrichtung der Folien 2 gearbeitet werden, was zu einer symmetrischen Ausbildung auch der Schweißraupe um Mittelebene zwischen den Folien 2 und daher einer Vergrößerung des Querschnittes des Verbindungskanals 4 führt.

Die geneigte Ausrichtung der Verbindungskanäle 4 gegen die Faltachse F hat auch für die Schweißraupen den Vorteil, daß diese bei vollständig entlüftetem Körper K einen spiralförmigen Verlauf nehmen und daher mechanisch weniger belastet sind.

## Patentansprüche

1. Fluidbefüllbarer, volumsveränderlicher Körper, bestehend aus zwei übereinanderliegenden, miteinander entlang des umlaufenden Randes verbundenen, vorzugsweise verschweißten Folien, vorzugsweise aus Kunststoffmaterial, welche Folien entlang einer Faltachse einen Scharnierbereich bilden, entlang welches Scharnierbereiches die Folien unter Bildung zweier zumindest teilweise übereinanderliegender Teilbereiche des aufblasbaren Körpers übereinandergefaltet sind, und wobei durch die Folien zumindest ein den Scharnierbereich durchquerender Verbindungskanal zwischen den beiden Teilbereichen des befüllbaren Körpers ausgebildet ist, **dadurch gekennzeichnet, daß** der oder jeder Verbindungskanal (4) mit der Faltachse (F) einen Winkel (α) kleiner 90° und größer 0° einschließt.

2. Körper nach Anspruch 1, **dadurch gekennzeichnet, daß** der oder jeder Verbindungskanal (4) mit der Faltachse (F) einen Winkel (α) zwischen 30° und 60° einschließt, vorzugsweise einen Winkel (α) von etwa 45°.

3. Körper nach Anspruch 1 oder 2, **dadurch gekennzeichnet, daß** der oder jeder Verbindungskanal (4) seitlich durch Bereiche (5) begrenzt ist, in welchen die Folien flächig miteinander verbunden sind.

4. Körper nach Anspruch 3, **dadurch gekennzeichnet, daß** die Folien (2) flächig miteinander verschweißt sind.

5. Körper nach Anspruch 3 oder 4, **dadurch gekennzeichnet, daß** die Eckbereiche der flächigen Verbindungen (5) der Folien (2) abgerundet ausgeführt sind.

6. Körper nach einem der Ansprüche 1 bis 5, **dadurch gekennzeichnet, daß** im Verlauf des oder jedes Verbindungskanals (4) zumindest ein Element vorgesehen ist, welches die Folien (2) auch in entlüftetem Zustand des Körpers (K) über zumindest einen Teil der Breite des Verbindungskanals (4) beabstandet hält.

7. Körper nach einem der Ansprüche 1 bis 5, **dadurch gekennzeichnet, daß** der oder jeder Verbindungskanal (4) seitlich durch die bei der flächigen Verschweißung der Folien (2) entstandenen Schweißraupen begrenzt ist, welche Schweißraupen einen Abstand zwischen den Folien (2) zumindest im unmittelbaren Nahbereich an der Seite des oder jedes Verbindungskanals (4) aufrechterhalten.

8. Körper nach Anspruch 7, **dadurch gekennzeichnet, daß** die Schweißraupen dicker ausgebildet sind als zur sicheren Verbindung der übereinanderliegenden Folien (2) notwendig ist.

9. Körper nach Anspruch 7 oder 8, **dadurch gekennzeichnet, daß** die Breite des Verbindungskanals (4) größer ist als die Höhe der ihn seitlich begrenzenden Schweißraupen, vorzugsweise um den Faktor 3.
